# EUROPÄISCHE PATENTANMELDUNG

(11) **EP 1 102 458 A2**
(43) Veröffentlichungstag der Anmeldung: **23.05.2001**
(21) Anmeldenummer: 00122819.6
(22) Anmeldetag: 20.10.2000
(51) Int. Cl.: H04M 1/27, H04M 1/274

(54) **Verfahren und Vorrichtung für Telekommunikationsendgeräte zur Erhöhung der Datensicherheit bei Online-Diensten**

(30) Priorität: 20.11.1999 DE 19955994
(71) Anmelder: Deutsche Telekom AG, 53113 Bonn (DE)
(72) Erfinder: Winkelmann, Bernd, 32805 Horn-Bad Meinberg (DE)

(57) **Zusammenfassung**

Es werden ein Verfahren und eine Vorrichtung zum Löschen von Informationen in einem Wahlwiederholungsspeicher von Telekommunikationsendgeräten zur Erhöhung der Datensicherheit bei Online-Diensten beschrieben. Nachdem in den letzten Jahren zunehmend Online-Dienste eingeführt wurden, bei denen sowohl Menüführung als auch Zugangscodes zur Identifikation und Authentifikation des Anrufers über die Tastatur von Telekommunikationsendgeräten eingegeben werden, führt die in einem Wahlwiederholungsspeicher gespeicherte Information zu von in der Öffentlichkeit weitgehend unbeachteten Risiken hinsichtlich der Sicherheit von Online-Diensten. Stellt zum Beispiel eine Person eine Verbindung zu einem menügeführten Dienst her für den auch eine Kontonummer oder eine PIN einzugeben ist, dann werden diese in einem Speicher des Telekommunikationsendgerätes gespeichert. Bei gewolltem oder ungewolltem Abbruch kann eine Wahlwiederholungsfunktion über eine Wahlwiederholungstaste ausgelöst werden. Dabei werden alle im Wahlwiederholungsspeicher gespeicherten Ziffern ausgesendet und können im Einzelverbindungsnachweis dargestellt werden, so daß zum Beispiel eine PIN im Einzelverbindungsnachweis oder sogar auf der Displayanzeige des Telekommunikationsendgerätes sichtbar wird. Hier wird nun eine technisch elegante Lösung in Form eines Verfahrens und einer Vorrichtung für automatische Wahlwiederholung beschrieben, wobei entweder eine zusätzliche Taste bzw. Diskretionstaste im Telekommunikationsendgerät integriert ist, die nach Drücken sicherstellt, daß die schützenswerten Ziffern bzw. Daten nachträglich automatisch gelöscht werden. Anstelle der Löschtaste kann diese Funktion durch Drücken einer Kombination bereits vorhandener Tasten im Telekommunikationsendgerät gestartet werden oder durch ein integriertes sprachgesteuertes Modul.

## Beschreibung

Die Erfindung betrifft ein Verfahren und eine Vorrichtung für Telekommunikationsendgeräte zur Erhöhung der Datensicherheit bei Online-Diensten nach dem Oberbegriff des Patentanspruchs 1 bzw. 7.

Telefone als Telekommunikationsendgeräte waren ursprünglich zur reinen Sprachübertragung konzipiert worden. Im Laufe der Zeit wurde dann eine Taste zur Wahlwiederholung der zuletzt gewählten Rufnummer eingeführt. Nachdem in den letzten Jahren zunehmend Online-Dienste eingeführt werden, wie zum Beispiel der comdirektbank, bei denen sowohl Menüführung als auch Zugangs-Codes zur Identifikation und Authentifikation des Anrufers über die Tastatur von Telefonen eingegeben werden, führt der mit der Wahlwiederholungstaste verbundene Wahlwiederholungsspeicher bzw. die entsprechende Operation zu von der Öffentlichkeit bisher weitestgehend unbeachteten Risiken für die Sicherheit von Online-Diensten. Diese ergeben sich zum einen aus dem Zusammenspiel von Vermittlungstechnik und Telekommunikationsendgerät und zum anderen aus der Funktionalität des jeweiligen Endgerätes selbst.

Heutzutage werden bestimmte Steuerziffern zwangsläufig auch im Kommunikationsdatensatz als Bestandteil der Zielrufnummer eingetragen, sofern diese Steuerziffern bereits vor dem Wahlendezeichen, das heißt, der gerufene vermittelnde Netzknoten (VNK) signalisiert, daß der Verbindungsaufbau vollständig ist, eingegeben werden. Dies gilt aber nur, wenn die Eingabe vor dem Senden des Wahlendekennzeichens erfolgt, die Verbindung demzufolge noch gar nicht aufgebaut ist. Wird die Eingabe der Zielwahl und der weiteren Ziffern sehr schnell bzw. die Zielwahl über eine Kurzwahl oder Wahlwiederholungstaste durchgeführt, dann erscheinen diese Ziffern in der Einzelverbindungsübersicht.

Der rufende VNK kann beim Verbindungsaufbau nicht erkennen, welche Ziffern zur Zielwahl gehören und welche nicht. Der soeben beschriebene Effekt ist demzufolge nicht zu vermeiden. Die Protokollstandards der Vermittlungstechnik sind weltweit abgestimmt, so daß eine Änderung selbst unter Aufwendung erheblicher finanzieller Mittel im nationalen Alleingang nicht möglich ist.

Bei den nicht zur Zielwahl gehörenden Ziffern handelt es sich an dieser Stelle um keine Art von vorzeitiger Eingabe in die anschließende Dialogsteuerung des angerufenen Dienstes, da die Ziffern vor bestehender Verbindung noch nicht als Nachrichteninhalt übermittelt werden können. Somit ist die Eingabe von weiteren Ziffern, die nicht zur Zielwahl gehören, zu diesem Zeitpunkt ohne Nutzen; demzufolge sind die weiteren Ziffern an dieser Stelle auch nicht Nachrichteninhalt, sodaß das Fernmeldegeheimnis an dieser Stelle ungefährdet bleibt.

Die Aufzeichnung von Ziffern, die nach der Meldung des gerufenen Anschlusses eingegeben werden, ist ausgeschlossen. Das bedeutet, daß Ziffern, die zum Beispiel zu einer PIN oder Menüsteuerung benutzt werden, vom Netzbetreiber nicht aufgezeichnet werden und somit auch im Normalfall nicht in der Einzelverbindungsübersicht erscheinen.

Unter Berücksichtigung der oben beschriebenen Fakten ergeben sich folgende Riskiken für die Sicherheit von Online-Diensten, die über die Zifferntastatur von Telekommunikationsendgeräten bedient werden:
Der Kunde stellt eine Verbindung zu einem menügeführten Online-Dienst her, für den zum Beispiel auch eine Kontonummer oder PIN einzugeben ist. Die gesamten Eingaben werden bei modernen Endgeräten im Rahmen der dort vorhandenen Speicherkapazität im Wahlwiederholungsspeicher abgespeichert. Nun ist es möglich, daß der Kunde nach Beendigung der Verbindung, zum Beispiel nach einem gewollten Verbindungsabbruch durch den Kunden, über die Wahlwiederholung erneut eine Verbindung zum gleichen Ziel herstellen will. Alle im Wahlwiederholungsspeicher gespeicherten Ziffern werden ausgesendet und können im Einzelverbindungsnachweis dargestellt werden. Somit kann es passieren, daß zum Beispiel eine PIN im Einzelverbindungsnachweis sichtbar wird. Eine so durch Wahlwiederholung erzeugte Rufnummer kann überdies auch durch einen Dritten mit Zugriff auf das Telekommunikationsendgerät über die Displayanzeige des Telekommunikationsendgerätes abgerufen werden.

Die einzig derzeit praktikable und auch durchgeführte Möglichkeit, die oben angeführten Effekte auszuschließen, besteht darin, daß nach Beendigung der Verbindung zu einem Online-Dienst bei konventionellen Telefonen der Hörer erneut abgenommen und mindestens eine Ziffer gewählt wird, um dem Telekommunikationsendgerät vorzutäuschen, daß erneut eine Verbindung aufgebaut werden sollte. Anschließend ist der Hörer wieder aufzulegen. Dieses soeben beschriebene Verfahren ist in einer Werbebroschüre der comdirektbank unter dem Titel "Service-Computer" als Anleitung für Kunden auf Seite 18, letzter Absatz im Kästchen, beschrieben. Hier steht geschrieben: "Um einen Mißbrauch bei Displayanzeige und der Wahlwiederholungstaste auszuschließen, nehmen Sie bitte nach Abschluß des Gespräches erneut den Hörer ab, wählen eine beliebige Zahl und legen dann den Hörer auf".

Diese Lösung hat den Nachteil, daß eine nicht erforderliche physische Verbindung zur Vermittlungsstelle aufgebaut wird und nutzlos Resourcen der Vermittlungstechnik belegt werden. Dadurch entstehen dem Netzbetreiber Kosten, unabhängig davon, ob diese in Form von Entgelten für Fehlverbindungen an den Kunden weitergegeben werden. Darüber hinaus versagt das von der comdirectbank beschriebene Verfahren, sobald bzw. sofern ein Wahlwiederholungsspeicher die Möglichkeit bietet, mehrere, zum Beispiel die zwei zuletzt gewählten Rufnummern zu speichern.

Der Erfindung liegt deshalb die Aufgabe zugrunde, ein Verfahren und eine Vorrichtung für Telekommunikationsendgeräte mit Wahlwiederholungsspeicher zu schaffen, die die Datensicherheit, insbesondere bei Online-Diensten wesentlich erhöht und die oben beschriebenen Nachteile auf technisch relativ einfache Art und Weise vermeidet.

Die erfindungsgemäße Lösung der Aufgabe ist im Kennzeichen des Patentanspruchs 1 bzw. des Patentanspruchs 7 charakterisiert.

Weitere Lösungen der Aufgabe bzw. Ausgestaltungen des Erfindungsgegenstands sind in den Kennzeichen der Patentansprüche 2 bis 6 und 8 bis 10 charakterisiert.

Die Lösung der Aufgabe wird kostengünstig durch eine zusätzliche Taste, nämlich eine Diskretionstaste, erreicht, die in jede Art von Telekommunikationsendgeräten, wie Telefon, Telefax, Handy oder ähnliche Geräte zur Löschung des Inhalts des Wahlwiederholungsspeichers integriert werden kann. Neben der zusätzlichen Sicherheit für Online-Dienste bietet diese zusätzliche Taste auch noch einen zusätzlichen Schutz für persönliche Geheimnisse, die es in der einen oder anderen Form zwischen den das Gerät benutzenden Personen geben kann, zum Beispiel wenn innerhalb einer Familie persönliche Kontakte nicht über eine gespeicherte Zielrufnummer offenbart werden sollen.

Gegenüber der alternativen Lösung einer fallweisen Deaktivierung der Wahlwiederholung vor Anrufen, bei denen schützenswerte Ziffern gewählt werden sollen, bietet die Methode des nachträglichen Löschens den Vorteil, daß man eben nicht vorher daran denken muß, sondern die Information auch jederzeit nachträglich beseitigen kann. Eine Löschfunktion für den Wahlwiederholungsspeicher zur Beseitigung von darin enthaltenen Steuerungsinformationen für Online-Dienste aufgrund der Tatsache, daß eine sichere Unterscheidung zwischen Zielrufnummer und nachgewählten Ziffern zur Steuerung eines Online-Dienstes durch das jeweilige Telekommunikationsendgerät nicht möglich ist, fehlt bisher.

Durch das Einführen der Diskretionstaste lassen sich kostengünstig und wirkungsvoll sensible Daten sowohl vor dem Ausspähen vor Ort über Display des Endgerätes als auch vor einem Erscheinen in der Einzelverbindungsübersicht schützen. Mit diesem leicht zu kommunizierenden Zusatznutzen entsteht somit eine neue Gerätegeneration, die zum Beispiel ganz besonders für das Online-Banking geeignet ist. Gleichzeitig werden die Netzbetreiber in die Lage versetzt, das Geschäft mit Online-Diensten und die dadurch entstehenden Einnahmen aus Verbindungsentgelten abzusichern, denn Online-Dienste werden nur dann auf Dauer eine breite Marktakzeptanz finden, wenn die Kunden von deren Sicherheit überzeugt werden können. Ein mit der Zusatztaste ausgerüstetes Telekommunikationsendgerät mit Wahlwiederholungsspeicher bietet diese Sicherheit.

Nicht erforderliche physische Verbindungen zur Vermittlungsstelle und nutzlos belegte Resourcen der Vermittlungstechnik durch hilfsweise aufgebaute Scheinverbindungen nach der Nutzung von Online-Diensten entfallen.

Weitere Vorteile, Merkmale und Anwendungsmöglichkeiten insbesondere der Zusatztaste, ergeben sich aus der nachfolgenden Beschreibung in Verbindung mit dem in der Zeichnung dargestellten Ausführungsbeispiel.

Die Erfindung wird im folgenden anhand von einem in der Zeichnung dargestellten Ausführungsbeispiel näher beschrieben. In der Beschreibung, in den Patentansprüchen, der Zusammenfassung und in der Zeichnung werden die in der hinten angeführten Liste der Bezugszeichen verwendeten Begriffe und zugeordneten Bezugszeichen verwendet.

In der Zeichnung bedeutet:

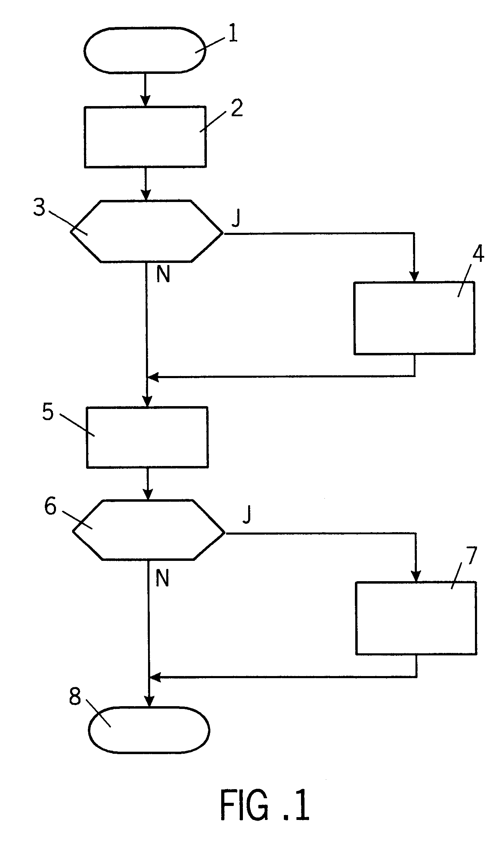

- Fig. 1: ein prinzipielles Operations- bzw. Flußdiagramm des erfindungsgemäßen Verfahrens.

Bei der nachfolgenden Beschreibung des Ausführungsbeispiels anhand eines Flußdiagramms für das erfindungsgemäße Verfahren wird von Telekommunikationsendgeräten mit Wahlwiederholungsspeicher ausgegangen, die mit einer zusätzlichen Taste, einer Diskretionstaste zur Löschung des Inhalts des Wahlwiederholungsspeichers ausgestattet sind. Durch Drücken dieser zusätzlichen Taste, die auch als spezielle Löschtaste für den Wahlwiederholungsspeicher charakterisiert werden kann, wird der Inhalt des integrierten Wahlwiederholungsspeicher des jeweiligen Telekommunikationsendgerätes gelöscht. Die physikalische Gestaltung des Löschvorgangs im Speicherbaustein selbst hängt von der im konkreten Einzelfall gewählten technischen Realisierung des Wahlwiederholungsspeichers ab. Eine Löschung kann zum Beispiel durch die Wiederherstellung eines durch den Hersteller definierten neutralen Zustands des entsprechenden Speicherbereiches oder aber durch ein Überschreiben mit einem vordefinierten Wert für den Speicherzustand "leer" erfolgen.

Außerdem ist es möglich, daß anstelle der speziellen zusätzlichen Taste für die Löschfunktion als Schnittstelle Mensch-Maschine eine Sprachsteuerung oder eine Kombination vorhandener Tasten am Telekommunikationsendgerät verwendet wird. Außerdem ist auch eine Kombination der Steuerung durch Sprachbefehle und der zusätzlichen integrierten Taste bzw. von bereits vorhandenen Tasten zur Erhöhung der Sicherheit ohne erfinderisches Zutun möglich.

In dem in Fig. 1 dargestellten prinzipiellen Flußdiagramm zur Darstellung der einzelnen Verfahrensschritte in Zeitfolge wird davon ausgegangen, daß das zu bedienende Endgerät mit einem Wahlwiederholungsspeicher und der zusätzlichen Taste oder einer entsprechenden Tastenkombinaton ausgerüstet ist.

Bei Start 1 wird der Hörer abgenommen. Bei 2 erfolgt die Wahl der Zielrufnummer. An dieser Stelle ist es noch unerheblich, ob ein Online-Dienst angewählt wird oder ob zum Beispiel nur eine reine Sprachverbindung hergestellt werden soll. Bei 3 entscheidet sich der weitere Ablauf aufgrund der Fragestellung, ob ein Online-Dienst angewählt worden ist oder nicht.

Wurde ein solcher Online-Dienst angewählt (Zweig J = Ja), so erfolgt im weiteren Verlauf der Verbindung bei 4 die Eingabe weiterer Steuerungsinformationen, zum Beispiel PIN oder Menüführung, über die Wähltastatur des nichtdargestellten Telekommunikationsendgerätes. Diese Informationen werden im Rahmen der Speicherkapazität des Wahlwiederholungsspeichers als weitere an die zuvor gewählte Rufnummer des Online-Dienstes angehängte Ziffern im Wahlwiederholungsspeicher mitgespeichert.

Wurde kein Online-Dienst genutzt (Zweig N = Nein), dann verläuft der Ablauf ohne Umweg über 4 direkt von 3 nach 5. Bei 5 erfolgt das Beenden der Verbindung.

Bei 6 entscheidet sich der weitere Ablauf erneut aufgrund der Fragestellung, ob ein Online-Dienst angewählt worden ist oder nicht (Zweig J oder N). Zielrufnummern, die zwar zu keinem Online-Dienst führen, aber aus anderen (zum Beispiel familiären Gründen) anderen Mitbenutzern des Telekommunikationsendgerätes nicht bekannt werden sollen, werden an dieser Stelle so behandelt, als hätte es sich um eine Verbindung zu einem Online-Dienst gehandelt.

Wurde ein solcher Online-Dienst angewählt (Zweig J), so kann der Benutzer des Telekommunikationsendgerätes nun bei 7 die Löschfunktion für den Wahlwiederholungsspeicher aktivieren, um zum Beispiel dort gespeicherte Steuerungsinformationen für Online-Dienste zu beseitigen. Damit ist der Inhalt des Wahlwiederholungsspeichers eindeutig gelöscht. Daraus wird auch der Vorteil dieser Methode des nachträglichen Löschens offenbar, daß man eben nicht vorher daran denken muß, sondern daß die Information jederzeit nachträglich beseitigt werden kann. Mit der Diskretionstaste bzw. zusätzlichen Taste bzw. Alternativen lassen sich kostengünstig und wirkungsvoll die sensiblen Daten sowohl vor dem Ausspähen vor Ort über das Display eines Telekommunikationsendgerätes als auch vor einem Erscheinen in der Einzelverbindungsübersicht schützen. Der technische Aufwand für diese Lösung ist marginal. Bei 8 ist das beschriebene Verfahren beendet.

Wurde kein Online-Dienst benutzt (Zweig N), ist das Verfahren beendet und zwar ohne Umweg über 7. Die Existenz der zusätzlichen Löschfunktion für den Wahlwiederholungsspeicher beeinträchtigt die Bedienung des Telekommunikationsendgerätes nicht, solange keine sensiblen Daten vor dem Ausspähen zu schützen sind.

### Liste der Bezugszeichen

- 1: Start (Hörer abnehmen)
- 2: Wahl der Rufnummer
- 3: Online-Dienst angewählt oder nicht
- 4: Eingabe weiterer Steuerungsinformationen
- 5: Beenden der Verbindung
- 6: Online-Dienst angewählt oder nicht
- 7: Aktivierung der Löschfunktion für den Wahlwiederholungsspeicher
- 8: Ende (Hörer auflegen)

## Patentansprüche

1. Verfahren zur Löschung des Inhaltes des Wahlwiederholungsspeichers von Telekommunikationsendgeräten zur Erhöhung der Datensicherheit bei Online-Diensten, dadurch gekennzeichnet,
daß die Wahl (2) einer Rufnummer für einen Online-Dienst am Telekommunikationsendgerät erfolgt,
daß darauf die Eingabe weiterer Steuerungsinformationen (4), wie PIN oder Menüführung, über die Wähltastatur des Telekommunikationsendgerät erfolgt,
daß nach Beenden der Verbindung die Löschfunktion für den Wahlwiederholungsspeicher (7) aktiviert wird und
daß dadurch der Inhalt des Wahlwiederholungsspeichers eindeutig gelöscht wird.

2. Verfahren nach Patentanspruch 1, dadurch gekennzeichnet,
daß durch die zusätzliche Taste bzw. Diskretionstaste alle sensiblen Daten im Wahlwiederholungsspeicher gelöscht werden und somit vor dem Ausspähen vor Ort oder über das Display des Telekommunikationsendgerätes als auch vor einem Erscheinen in einer Einzelverbindungsübersicht geschützt sind.

3. Verfahren nach einem der Patentansprüche 1 und 2, dadurch gekennzeichnet,
daß für Netzbetreiber dadurch automatisch die unnötige Belegung von Leitungen und Vermittlungstechnik durch Scheinverbindungen nach der Nutzung von Online-Diensten ausgeschlossen wird.

4. Verfahren nach einem der Patentansprüche 1 bis 3, dadurch gekennzeichnet,
daß durch Drücken der Löschtaste für den Wahlwiederholungsspeicher eines Telekommunikationsendgerätes der Inhalt des Wahlwiederholungsspeichers automatisch gelöscht wird.

5. Verfahren nach einem der Patentansprüche 1 bis 3, dadurch gekennzeichnet,
daß der Aufruf bzw. Abruf der Löschfunktion für den Wahlwiederholungsspeicher durch Drücken einer Tastenkombination bereits vorhandener Tasten am/im Telekommunikationsendgerät auslösbar ist.

6. Verfahren nach einem der Patentansprüche 1 bis 3, dadurch gekennzeichnet,
daß der Aufruf der Löschfunktion für den Wahlwiederholungsspeicher sprachgesteuert durch Erkennen von entsprechenden Sprachbefehlen im Telekommunikationsendgerät erfolgt.

7. Vorrichtung zur Durchführung des Verfahrens nach den Patentansprüchen 1 bis 6, dadurch gekennzeichnet,
daß eine zusätzliche Löschtaste für einen Wahlwiederholungsspeicher in Telekommunikationsendgeräten zur Löschung des Inhalts des Wahlwiederholungsspeichers angeordnet ist.

8. Vorrichtung zur Durchführung des Verfahrens nach einem der Patentansprüche 1 bis 6, dadurch gekennzeichnet,
daß bereits vorhandene Tasten in einem Telekommunikationsendgerät in Kombination gedrückt, die automatische Löschfunktion von Informationen im Wahlwiederholungsspeicher realisieren.

9. Vorrichtung zur Durchführung des Verfahrens nach einem der Patentansprüche 1 bis 6, dadurch gekennzeichnet,
daß ein Telekommunikationsendgerät zum Auslösen des Löschens von Informationen in einem Wahlwiederholungsspeicher mit einem Spracherkennungsmodul ausgerüstet ist, dessen Ausgangssignale zum Wahlwiederholungsspeicher übertragen werden und dort die gewünschten Informationen löschen.

10. Schaltungsanordnung zur Durchführung des Verfahrens nach Patentanspruch 1.
